(19) **Europäisches Patentamt**
**European Patent Office**
**Office européen des brevets**

(11) **EP 2 286 985 B1**

(12) **EUROPEAN PATENT SPECIFICATION**

(45) Date of publication and mention
of the grant of the patent:
**14.10.2015 Bulletin 2015/42**

(51) Int Cl.:
**B29D 11/00** *(2006.01)* **G02B 1/10** *(2015.01)*
**G02B 1/11** *(2015.01)*

(21) Application number: **10172158.7**

(22) Date of filing: **06.08.2010**

(54) **Method of producing a plastic lens having an antistatic coating**

Verfahren zur Herstellung einer Kunststofflinse mit antistatischer Beschichtung

Procédé de production d'une lentille en plastique avec couche antistatique

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **10.08.2009 JP 2009185495**

(43) Date of publication of application:
**23.02.2011 Bulletin 2011/08**

(73) Proprietor: **EHS Lens Philippines, Inc.
Cavite (PH)**

(72) Inventors:
• **Nishimoto, Keiji
Nagano 392-8502 (JP)**
• **Noguchi, Takashi
Nagano 392-8502 (JP)**

(74) Representative: **Hoffmann Eitle
Patent- und Rechtsanwälte PartmbB
Arabellastraße 30
81925 München (DE)**

(56) References cited:
**EP-A1- 1 043 606     DE-A1- 1 696 111
US-A- 5 372 874      US-A1- 2009 141 357**

• **NGOC LAM HUONG HOANG ET AL: "Low-
temperature fabrication of transparent
conducting anatase Nb-doped TiO2 films by
sputtering" JAPANESE JOURNAL OF APPLIED
PHYSICS, JAPAN SOCIETY OF APPLIED
PHYSICS, JP LNKD- DOI:10.1143/APEX.
1.115001, vol. 47, no. 11, 1 November 2008
(2008-11-01), pages 115001-1, XP001521488
ISSN: 0021-4922**

**Description**

BACKGROUND

1. Technical Field

The present invention relates to a method for producing an optical article for use as a lens, such as a spectacle lens, or a like optical material or product.

2. Related Art

Optical articles such as spectacle lenses have a substrate (optical substrate) with various functions. Formed on the surface of such a substrate are layers (films) with various functions for enhancing the functions of the substrate and protecting the substrate. Known examples thereof are a hard coating layer for ensuring the durability of a lens substrate, an antireflection layer for preventing ghosting and flickering, and the like. A typical antireflection layer is a so-called multilayer antireflection layer that is formed by alternately laminating oxide films with different refractive indexes on the surface of a lens substrate having formed thereon a hard coating layer.

JP-A-2004-341052 describes the provision of a novel, antistatic optical element suitable for use in a substance with low heat resistance. It is also described that in a spectacle lens or like optical element having a plastic optical substrate and a multilayer antireflection film formed thereon, the antireflection film includes a transparent, electrically conductive layer, and that the transparent, electrically conductive layer is formed by ion-assisted vacuum deposition, while other layers of the antireflection film are formed by electron-beam vacuum deposition. As materials for the electrically conductive layer, inorganic oxides of one or more of indium, tin, and zinc are mentioned. ITO (Indium Tin Oxide: mixture of indium oxide and tin oxide) is described as particularly preferred.

In the field of optical articles such as spectacle lenses, for the purpose of achieving antistatic performance, electromagnetic shielding performance, etc., there has been a demand for a method for forming a layer capable of imparting electrical conductivity to replace ITO that uses expensive indium. One example thereof is titanium niobium oxide ($Ti_{1-x}Nb_xO_2$) called TNO. With respect to a transparent, electrically conductive substrate for a transparent electrode and a transparent, electrically conductive thin film, the pamphlet of WO 2006/016608 describes the provision of a transparent metal material made of a material that can be stably supplied and have excellent chemical resistance, etc., and also a transparent electrode. It also describes that a metal oxide layer of anatase crystal structure is formed on a base, and that the metal oxide layer is made of $TiO_2$ so that low resistivity is realized while retaining the internal transmissivity; that is, by producing $TiO_2$ as a result of substituting the Ti site of anatase $TiO_2$ with other atoms (Nb, Ta, Mo, As, Sb, W, etc.), the electrical conductivity can be remarkably improved while maintaining the transparency.

However, at the time of deposition of the transparent metal, it is neccessary to maintain the temperature of the base as high as 550°C. The high-temperature process is performed for the purpose of obtaining the anatase crystal structure. It is said that the formation of a TNO film requires a process in which the temperature is maintained at 300°C or more. Meanwhile, a plastic lens resists a temperature of 100°C at most. Therefore, TNO that requires a high-temperature process cannot be employed in place of ITO as an electrically conductive layer of a plastic lens.

For example, JP-A-2004-300580 describes the provision of a method for producing a deposition composition, capable of forming a high-refractive-index layer by deposition even at low temperatures and also of providing an antireflection film that has excellent abrasion resistance, chemical resistance, and heat resistance and is less susceptible to time-dependent degradation in heat resistance; a deposition composition; and a method for producing an optical component having an antireflection film. It further describes a method for producing a deposition composition, the method including sintering a deposition material mixture prepared by mixing deposition materials containing titanium dioxide and niobium pentoxide; a deposition composition containing titanium dioxide and niobium pentoxide; and a method for producing an optical component having an antireflection film, the method inclucing evaporating the deposition composition, and depositing the resulting evaporation product on a substrate to form a high-refractive-index layer of an antireflection film. The deposition composition containing titanium dioxide and niobium pentoxide produced by deposition at a low temperature has a high refractive index. However, attention is not focused on its resistance, and JP-A-2004-300580 nowhere mentions a reduction in electrical resistance.

US-A-2009/0141357 concerns a plastic lens having a multilayer antireflective film present on the surface of a plastic lens substrate, either directly or through another layer, wherein said multilayer antireflective film comprises a composite layer in which at least two metal oxide layers, containing an identical metal element but different quantities of oxygen, are adjacent.

Hitosugi et al. have reported low-temperature (~300°C) methods of fabricating transparent conducting anatase Nb-doped $TiO_2$ films by sputtering (Applied Physics Express, 1, 2008, 115001)

## SUMMARY

An aspect of the invention provides a method for producing an optical article (optical device). The method includes the following steps:

(a) forming a light-transmissive first layer on an optical substrate, either directly or with another layer in between (step of forming a first layer); and
(b) depositing, by ion-assisted deposisition, a composition comprising at least one of titanium, niobium, an oxide of titanium and an oxide of niobium onto at least a portion of a surface layer of the first layer in order to reduce the resistance of the surface layer (step of depositing).

The inventors found that as a result of ion-assisted deposition of a composition comprising at least one of titanium, niobium, an oxide of titanium and an oxide of niobium, the resistance of at least a portion of the surface layer of the first layer (film) can be reduced without using a high-temperature process. That is, without using a high-temperature process, electrical conductivity can be imparted to the first layer by the deposited composition. Therefore, in an optical article having a substrate made of a material with not so high heat resistance, such as a plastic lens, an antistatic function and/or an electromagnetic shielding function can be given by the composition of the first layer (functional layer) that is, for example, a high-refractive-index layer of an antireflection film. This makes it possible to provide an optical article with such functions at low cost.

The advantages of such a method are not only that a high-temperature process is not required but also that as a result of ion-assisted deposition of a composition comprising at least one of titanium, niobium, an oxide of titanium and an oxide of niobium, the surface (surface layer) of the first layer can be reformed, thereby imparting electrical conductivity thereto. It is thus possible to reduce the resistance of the surface of an existing layer (first layer) instead of forming a relatively thick, electrically conductive layer like ITO. For example, without a great change in the optical design of an antireflection layer consisting of multiple layers, the resistance value (resistivity) of a layer (first layer) of the antireflection layer can be reduced.

It is believed that a resistance reduction results from the ion-assisted deposition (step b), where titanium, niobium, and oxygen may be mixed in at least a portion of the surface layer of the first layer. It is also believed that at least a portion of the surface layer of the first layer is titanium-niobium-oxidized without using a high-temperature process in step (b).

Titanium-niobium-oxidation (TN-Oxidation) as used herein means that niobium atoms or an oxide of niobium is used to dope an oxide of titanium or mixed therein or otherwise that titanium atoms or an oxide of titanium is used to dope an oxide of niobium or mixed therein, whereby a reduction in electrical resistance is observed in the resulting titanium-niobium-oxide-based region. At least within a short cycle, TN-Oxidation leads to the formation of anatase $Ti_{1-x}Nb_xO_2$ (TNO) crystals or a similar structure, and the result thereof is believed to appear as a reduction in the electrical resistance in the titanium-niobium-oxide-based region. It is herein disclosed that as a result TN-Oxidation of a limited region of the surface layer by ion-assisted deposition, the resistance can be reduced to a degree sufficient to impart an antistatic function and the like to an optical article having a substrate with not so high heat resistance, such as a lens, without using a process in which the substrate is kept at several hundred degrees Celsius (high-temperature process).

One of the advantages offered by TN-Oxidation is that an epitaxially grown TNO film is nearly light-transmissive or transparent. There is a possibility that ion-assisted deposition will change the state of the surface layer of the first layer, causing an increase in the light-absorption loss thereof. However, because one component (crystal component) that may be formed by ion-assisted deposition is light-transmissive, a reduction in light transmittance is likely to be suppressed by ion-assisted deposition on the surface of the first layer. Further, the portion reformed by ion-assisted deposition is practically limited to the surface layer of the first layer. Therefore, a reduction in the light transmittance of the first layer due to resistance reduction can be further suppressed.

When the first layer is a layer containing an oxide of titanium, the depositing step (the step (b)) preferably includes ion-assisted deposition of niobium or an oxide thereof. When the first layer is a layer containing an oxide of niobium, the depositing step (the step (b)) includes ion-assisted deposition of titanium or an oxide thereof. Further, when the first layer is an oxide not containing titanium or niobium (oxide layer containing no titanium or niobium), such as a layer containing an oxide of zirconium, the depositing step (the step (b)) preferably includes ion-assisted deposition of titanium or an oxide of titanium, followed by ion-assisted deposition of niobium or an oxide of niobium. When the first layer is an oxide not containing titanium or niobium (oxide layer containing no titanium or niobium), the depositing step (the step (b)) may alternatively include ion-assisted deposition of niobium or an oxide of niobium, followed by ion-assisted deposition of titanium or an oxide of titanium.

Typically, the first layer is an inorganic or organic antireflection layer that is laminated on the optical substrate with a hard coating layer in between or with a primer layer and a hard coating layer in between. When the first layer is an inorganic antireflection layer, such a first layer is typically a metal-oxide-containing layer. The first layer may be one layer of an antireflection layer with a multilayer structure. Alternatively, multiple layers thereof may also serve as first layers. In either case, the above-described method can be applied to achieve a reduction in the resistance value (resistivity) of the antireflection layer.

As stated above, the first layer may be a layer of an antireflection layer with a multilayer structure. In such a case, the method may further include a step (c) of forming an antifouling layer on the first layer directly or with another layer in between (step of forming an antifouling layer). An antifouling layer has water-repellent properties. Therefore, the surface of the optical article having an antifouling layer cannot retain atmospheric moisture, and thus is likely to be electrically charged. Even in the case of such an optical article having an antifouling layer, by applying the above-described method, electrical charging can be inhibited well.

Typically, the optical article having an antifouling layer is a spectacle lens. A spectacle lens often has a plastic lens substrate as its optical substrate. The above method is suitable for use in the case where a plastic lens substrate is used as the optical substrate and also in the case the optical article is a spectacle lens.

In addition to spectacle lenses, examples of typical optical articles also include projection lenses, imaging lenses, dichroic prisms, cover glasses, DVDs and like information recording devices, ornaments having an internal medium that gives aesthetic expression, etc. The above-described method is suitable for application to the production of these optical articles.

BRIEF DESCRIPTION OF THE DRAWINGS

The invention will be described with reference to the accompanying drawings, wherein like numbers reference like elements.

Fig. 1 is a sectional view showing the structure of a lens having an antireflection layer with the layer structure of Type A or C.

Fig. 2 schematically shows an ion-assisted deposition apparatus for use in the production of an antireflection layer.

Fig. 3 summarizes the material and thickness of each layer of an antireflection layer related to Type A.

Fig. 4 is a sectional view showing the structure of a lens having an antireflection layer with the layer structure of Type B.

Fig. 5 summarizes the material and thickness of each layer of an antireflection layer related to Type B.

Fig. 6 summarizes the material and thickness of each layer of an antireflection layer related to Type C.

Fig. 7 summarizes the results of the measurement of surface electrical resistance and optical absorption loss for the samples of Examples 1 to 9 and Comparative Example 1.

Fig. 8A is a sectional view showing the measurement of surface electrical resistance, and Fig. 8B is a plan view showing the measurement of surface electrical resistance.

DESCRIPTION OF EXEMPLARY EMBODIMENTS

The following will describe some embodiments of the invention. Although a spectacle lens is taken as an example of an optical article hereinafter, optical articles to which the invention is applicable are not limited thereto.

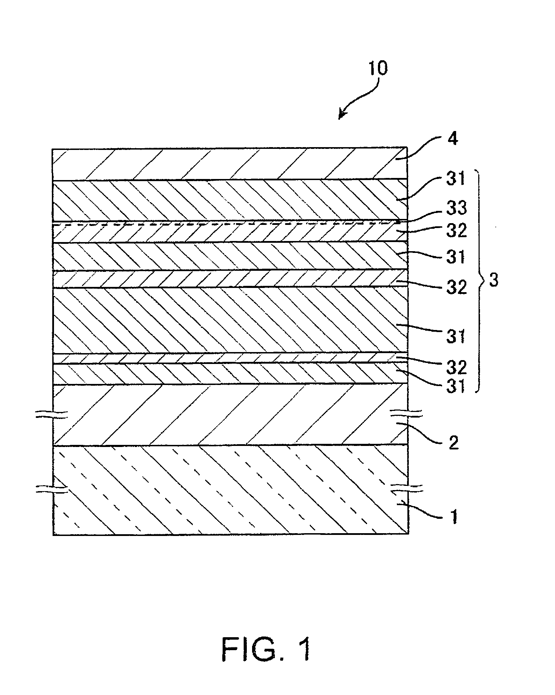

Fig. 1 shows the structure of an example of a typical spectacle lens in cross section. The lens 10 includes a lens substrate 1, a hard coating layer 2 formed on the surface of the lens substrate 1, a light-transmissive antireflection layer 3 formed on the hard coating layer 2, and an antifouling layer 4 formed on the antireflection layer 3. The lens substrate 1 in this example is a lens substrate made of plastic (plastic lens substrate). The lens substrate 1 may alternatively be a lens substrate made of glass (glass lens substrate).

1. Lens Overview

1.1 Lens Substrate

The lens substrate 1 may be, but is not limited to, a (meth) acrylic resin, a styrene resin, a polycarbonate resin, an allyl resin, a diethylene glycol bisallyl carbonate resin (e.g., CR-39® manufactured by PPG INDUSTRIES OHIO) or a like allyl carbonate resin, a vinyl resin, a polyester resin, a polyether resin, an urethane resin obtained by the reaction of an isocyanate compound with diethylene glycol or a like hydroxy compound, a thiourethane resin obtained by the reaction of an isocyanate compound with a polythiol compound, a transparent resin obtained by curing, for example, a polymerizable composition containing a (thio)epoxy compound having in the molecule one or more disulfide bonds, or the like. The refractive index of the lens substrate 1 is about 1.60 to about 1.75, for example. In this embodiment, the refractive index may be within, above, or below this range.

1.2 Hard Coating Layer (Primer Layer)

The hard coating layer 2 formed on the lens substrate 1 mainly serves to improve abrasion resistance. Examples of materials for the hard coating layer 2 include acrylic resins, melamine-based resins, urethane-based resins, epoxy-based resins, polyvinyl-acetal-based resins, amino-based resins, polyester-based resins, polyamide-based resins, Vinyl-alcohol-based resins, styrene-based resins, silicon-based resins, and mixtures and copolymers thereof. The hard coating layer 2 may be a silicone-based resin, for example, and can be formed by applying a coating composition containing metal oxide particles and a silane compound (hard-coating-layer-forming coating composition), and then curing the applied coating composition. The coating composition may contain colloidal silica, a polyfunctional epoxy compound, and like components (i.e., these components can be mixed in the coating composition).

Specific examples of metal oxide particles for use in the coating composition (hard-coating-layer-forming coating composition) are particles of metal oxides such as $SiO_2$, $Al_2O_3$, $SnO_2$, $Sb_2O_5$, $Ta_2O_5$, $CeO_2$, $La_2O_3$, $Fe_2O_3$, $ZnO$, $WO_3$, $ZrO_2$, $In_2O_3$, and $TiO_2$. Composite particles of two or more kinds of metal oxides are also usable. The coating composition may contain a colloidal dispersion of such particles in a dispersion medium such as water, an alcoholic solvent, or a like organic solvent (i.e., such a colloidal dispersion can be mixed in the coating composition).

Although the hard coating layer 2 may also have a function as a primer layer, it is also possible to separately provide a primer layer between the lens substrate 1 and the hard coating layer 2 in order to ensure adhesion between the lens substrate 1 and the hard coating layer 2. A primer layer is also effective in improving shock resistance which is generally insufficient in high-refractive-index lens substrates. Examples of resins for forming a primer layer include acrylic resins, melamine-based resins, urethane-based resins, epoxy-based resins, polyvinyl-acetal-based resins, amino-based resins, polyester-based resins, polyamide-based resins, vinyl-alcohol-based resins, styrene-based resins, silicon-based resins, and mixtures and copolymers thereof. Urethane-based resins and polyester-based resins are preferably used to form a primer layer for imparting adhesion.

Typically, the hard coating layer 2 and the primer layer are formed by a method in which a coating composition is applied by dipping, spinning, spraying, or flowing, and then dried by heating at a temperature of 40 to 100°C for several hours.

1.3 Antireflection Layer

Typically, the antireflection layer 3 formed on the hard coating layer 2 is an inorganic antireflection layer or an organic antireflection layer. An inorganic antireflection layer is typically a multilayer film, and can be formed, for example, by alternately laminating a low-refractive-index layer with a refractive index of 1.3 to 1.6 and a high-refractive-index layer with a refractive index of 1.8 to 2.6. The number of layers of such an antireflection layer may be about five or about seven. Examples of inorganic substances used for layers forming the antireflection layer include $SiO_2$, $SiO$, $ZrO_2$, $TiO_2$, $TiO$, $Ti_2O_3$, $Ti_2O_5$, $Al_2O_3$, $TaO_2$, $Ta_2O_5$, $NdO_2$, $NbO$, $Nb_2O_3$, $NbO_2$, $Nb_2O_5$, $CeO_2$, $MgO$, $SnO_2$, $MgF_2$, $WO_3$, $HfO_2$, and $Y_2O_3$. These inorganic substances are used singly, and a mixture of two or more kinds may also be used. The antireflection layer may be formed by a dry method such as vacuum deposition, ion plating, or sputtering, for example.

An organic antireflection layer may be formed by a wet method, for example. For example, the organic antireflection layer can be formed, in the same manner as in the production of the hard coating layer and the primer layer, by applying a coating composition (antireflection-layer-forming coating composition) containing silica-based particles having an inner cavity (hereinafter sometimes referred to as "hollow silica-based particles") and an organic silicon compound. The reason that the coating composition (antireflection-layer-forming coating composition) is configured to contain hollow silica-based particles is as follows. By the inner cavity thereof being filled with a gas or a solvent having a lower refractive index than that of silica, the refractive index of such particles is reduced more than in the case of silica-based particles having no cavity. As a result, an excellent antireflection effect can be imparted. Hollow silica-based particles can be produced by a method described in JP-A-2001-233611. Typically, particles having an average diameter of 1 to 150 nm and a refractive index of 1.16 to 1.39 are usable. The organic antireflection layer preferably has a thickness of 50 to 150 nm. When the thickness is above or below this range, this may result in an insufficient antireflection effect.

In the lens 10 according to this embodiment, at least one layer of the antireflection layer 3 has a surface layer with reduced resistance. The resistance of the surface layer of at least one layer (first layer) is reduced by ion-assisted deposition (deposition by an ion-beam-assisted method) of at least one composition selected from the group consisting of titanium, niobium, oxides of titanium, and oxides of niobium.

1.4 Antifouling Layer

In many cases, a water-repellent film or a hydrophilic antifogging film (collectively referred to as antifouling layer) 4 is formed on the antireflection layer 3. An example of the antifouling layer 4 is a layer of a fluorine-containing organosilicon compound formed on the antireflection layer 3 for the purpose of improving the water-repellent performance and the oil-repellent performance of the surface of the lens 10. Preferred examples of fluorine-containing organosilicon compounds are fluorine-containing silane compounds described in JP-A-2005-301208 and JP-A-2006-126782.

The fluorine-containing silane compound is preferably dissolved in an organic solvent to a predetermined concentration and used in the form of a water-repellent treatment liquid (antifouling-layer-forming coating composition). The antifouling layer 4 can be formed by, for example, applying the water-repellent treatment liquid onto the antireflection layer 3. The coating method therefor may be dipping, spin coating, or the like. In addition, it is also possible to charge the water-repellent treatment liquid into metal pellets, and then form the antifouling layer 4 by a dry method such as vacuum deposition.

The thickness of the antifouling layer 4 containing a fluorine-containing silane compound is not limited, and is preferably 0.001 to 0.5 $\mu$m, and more preferably 0.001 to 0.03 $\mu$m. When the antifouling layer 4 is too thin, this results in poor water-repellent and oil-repellent effects, while when the layer is too thick, the resulting surface is sticky, so both cases are undesirable. Further, when the thickness of the antifouling layer 4 exceeds 0.03 $\mu$m, the antireflection effect may be impaired.

2. Production of Samples

2.1 Example 1 (Layer Structure: Type A)

2.1.1 Selection of Lens Substrate and Formation of Hard Coating Layer

As a lens substrate 1, a plastic lens substrate for spectacles with a refractive index of 1.67 (trade name: Seiko Super Sovereign (SSV), manufactured by SEIKO EPSON) was used.

A coating liquid for forming a hard coating layer 2 (hard-coating-layer-forming coating liquid) was prepared as follows. First, 4.46 parts by weight of acid-anhydride-based curing agent (trade name: liquid curing agent (C2) (manufactured by ARAKAWA CHEMICAL INDUSTRIES)) was mixed with 20 parts by weight of epoxy resin-silica hybrid (trade name: Compoceran E102 (manufactured by ARAKAWA CHEMICAL INDUSTRIES)), and stirred to give a coating liquid. The obtained coating liquid was applied onto the lens substrate 1 using a spin coater to a predetermined thickness to form a hard coating layer 2. Subsequently, the coated lens substrate 1 (the lens substrate 1 having formed thereon the hard coating layer 2) was calcined at 125°C for 2 hours. As a result, a hard coating layer 2 having a thickness of about 2 $\mu$m was formed on the lens substrate 1. Hereinafter, such a sample having the lens substrate 1 and the hard coating layer 2 with a thickness of about 2 $\mu$m formed thereon is referred to as a lens sample 10a.

2.1.2 Formation of Antireflection Layer

2.1.2.1 Deposition Apparatus

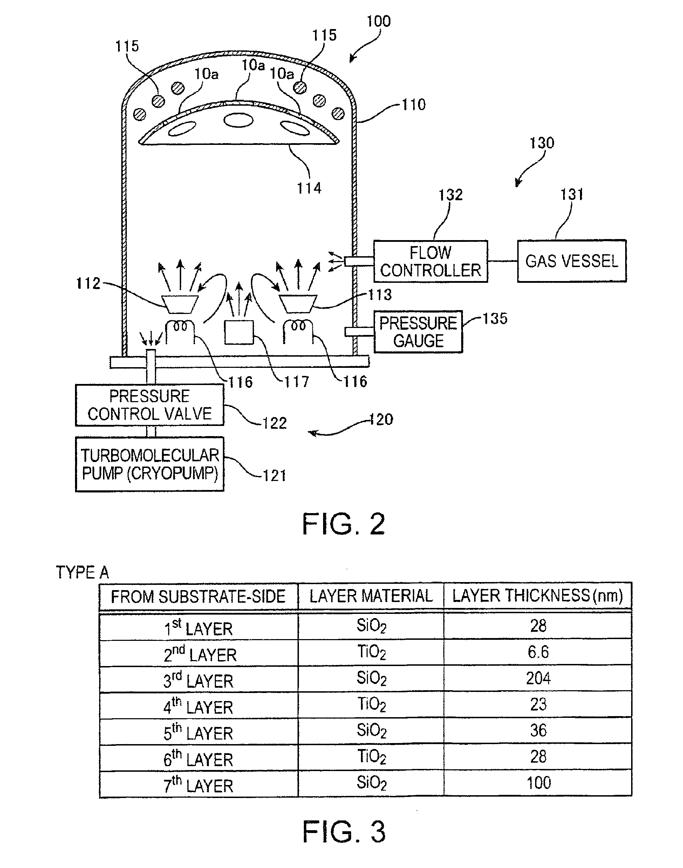

Subsequently, an inorganic antireflection layer 3 was formed on the lens sample 10a using a deposition apparatus 100 shown in Fig. 2. The deposition apparatus 100 shown in Fig. 2 is an electron-beam deposition apparatus, and has a vacuum chamber 110, an exhauster 120, and the gas feeder 130. The vacuum chamber 110 has a sample holder 114 that holds the lens sample 10a having the hard coating layer 2, a substrate heater 115 for heating the lens sample 10a placed in the sample holder 114, and a filament 116 that generates thermoelectrons. In the deposition apparatus 100, thermoelectrons are emitted from an electron gun (not illustrated) to irradiate the deposition material placed in evaporation sources (crucibles) 112 and 113, so that the deposition material is vaporized and deposited on the lens sample 10a.

In order to enable ion-assisted deposition, the deposition apparatus 100 further includes an ion gun 117 for ionizing and accelerating the gas introduced into the ion source, and applying the same to the lens sample 10a. In the examples below, using argon gas, argon ions are accelerated to perform ion-assisted deposition. However, the gas to be introduced is not limited to argon (Ar), and may also be oxygen ($O_2$), nitrogen ($N_2$), helium (He), neon (Ne), xenon (Xe), or the like.

The inside of the vacuum chamber 110 is kept at high vacuum, for example, $1 \times 10^{-4}$ Pa, by a turbomolecular pump or cryopump 121 and a pressure control valve 122 which are included in the exhauster 120. Alternatively, the inside of the vacuum chamber 110 may also be filled with a predetermined gas atmosphere using the gas feeder 130. For example, argon (Ar), nitrogen ($N_2$), oxygen ($O_2$), or the like is prepared in a gas vessel 131. The gas flow rate can be controlled by a flow controller 132, and the internal pressure of the vacuum chamber 110 can be controlled by a pressure gauge 135. The vacuum chamber 110 may further include a cold trap for removing remaining moisture, an apparatus for controlling the thickness of the resulting layer, etc. The apparatus for controlling the thickness of the resulting layer may be, for example, a reflection optical thickness gauge, a quarts oscillator thickness gauge, or the like. The substrate heater 115 is an infrared lamp, for example, and heats the lens sample 10a to extract gas or drive off moisture, thereby ensuring adhesion of a layer formed on the surface of the lens sample 10a.

In the deposition apparatus 100, main deposition conditions are the deposition material, the accelerating voltage and current of the electron gun, and whether ion-assisted deposition is employed. In the case of employing ion-assisted deposition, the conditions are determined by the kind of ions (the atmosphere in the vacuum chamber 110) and the voltage and current of the ion gun 117. Hereinafter, unless otherwise noted, the accelerating voltage and current of the electron gun are selected from a range of 5 to 10 kV and a range of 50 to 500 mA, respectively, based on the rate of layer formation (film formation rate), etc. In the case of employing ion-assisted deposition, the voltage and the current of the ion gun 117 are selected from a range of 200 V to 1 kV and a range of 100 to 500 mA, respectively, based on the rate of layer formation (film formation rate), etc.

2.1.2.2 Formation of Low-Refractive-Index Layer and High-Refractive-Index Layer

First, the lens sample 10a having the hard coating layer 2 is washed with acetone, and then heat-treated in the vacuum chamber 110 at about 70°C to evaporate moisture adhering to the lens sample 10a. Subsequently, ion cleaning was applied to the surface of the lens sample 10a. Specifically, using the ion gun 117, an oxygen ion beam was applied with energy of several hundreds of eV to the surface of the lens sample 10a to remove organic substances adhering to the surface of the lens sample 10a. This treatment enhances adhesion of a layer formed on the surface of the lens sample 10a. In place of oxygen ions, an inert gas such as argon (Ar), xenon (Xe), or nitrogen ($N_2$) may also be used to give the same treatment. Irradiation with oxygen radicals or oxygen plasma is also possible.

The vacuum chamber 110 was adequately evacuated. Then, by electron-beam vacuum deposition, silicon dioxide ($SiO_2$) layers as low-refractive-index layers 31 and titanium oxide ($TiO_2$) layers as high-refractive-index layers 32 were alternately laminated, thereby giving an antireflection layer 3.

The antireflection layer 3 of this example (Type A) has a seven-layer structure (see Fig. 1). The 1st layer, the 3rd layer, the 5th layer, and the 7th layer are low-refractive-index layers 31, and the 2nd layer, the 4th layer, and the 6th layer are high-refractive-index layers 32. The low-refractive-index layers 31 are $SiO_2$ layers, and were formed (film formation) by non-ion-assisted, vacuum deposition of silicon dioxide ($SiO_2$). The rate of film formation was 2.0 nm/sec, and the accelerating voltage and current of the electron gun were 7 kV and 100 mA, respectively.

The high-refractive-index layers 32 are $TiO_2$ layers, and were formed (film formation) by ion-assisted deposition of titanium oxide ($TiO_2$) while introducing oxygen gas. The rate of film formation was 0.4 nm/sec, and the accelerating voltage and current of the electron gun were 7 kV and 360 mA, respectively. The thicknesses of the 1st to 7th layers were controlled to be 28 nm, 6.6 nm, 204 nm, 23 nm, 36 nm, 28 nm, and 100 nm, respectively. Hereinafter, the $TiO_2/SiO_2$-based, seven-layer structure is referred to as Type A. Fig. 3 summarizes the material and thickness (nm) of each layer of Type A. In the lens sample 10a, the refractive index of the hard coating layer 2 was 1.65, the refractive index of the $SiO_2$ layers 31 was 1.462, and the refractive index of the $TiO_2$ layers 32 was 2.43.

2.1.2.3 Resistance Reduction

In Example 1, after forming the 1st to 6th layers, the surface layer 33 of the 6th layer was reformed as follows (resistance reduction). The 7th layer was formed (film formation) after reducing the resistance of the surface layer of the 6th layer.

After forming the $TiO_2$ layer 32 to serve as the 6th layer, niobium oxide ($Nb_2O_5$) was deposited by ion-assisted deposition (ion-beam-assisted deposition), in which argon gas was ionized and discharged, under the conditions to obtain a deposition thickness of about 2 nm. The conditions for ion-beam-assisted deposition are as follows.

Deposition source: niobium oxide ($Nb_2O_5$)
Assist gas: argon (Ar)
Accelerating voltage: 1000 V, Accelerating current: 200 mA

2.1.3 Formation of Antifouling Layer

After forming the antireflection layer 3, an antifouling layer 4 was successively formed. The surface of the 7th layer of the antireflection layer 3 was treated with oxygen plasma. Then, in the deposition apparatus 100, an antifouling layer 4 was formed (film formation) using as a deposition source a pellet material containing "KY-130" (trade name, manufactured by SHIN-ETSU CHEMICAL) which contains a high-molecular-weight, fluorine-containing organosilicon compound. At this time, heating was performed at about 500°C to evaporate KY-130. The deposition time was about 3 minutes. Oxygen plasma treatment allows the generation of silanol groups on the surface of the $SiO_2$ layer 31 serving as the last layer (7th layer), thereby improving chemical adhesion (chemical bond) between the antireflection layer 3 and the antifouling layer 4.

After the completion of deposition, the lens sample 10a having formed on one surface thereof the antireflection layer 3 and the antifouling layer 4 was removed from the deposition apparatus 100, reversed, and replaced into the apparatus. The above processes (the formation of the antireflection layer 3 and the antifouling layer 4) were then repeated in the same manner. As a result, an antireflection layer 3 and an antifouling layer 4 were formed on the other surface, thereby giving a desired lens 10. The obtained lens 10 was then removed from the deposition apparatus 100.

The lens 10 of Example 10 has, on each side of the plastic lens substrate 1, the hard coating layer 2, the antireflection layer 3 including a layer (first layer) in which at least a portion of the surface layer thereof has reduced resistance (specifically, the surface layer of the 6th layer has reduced resistance), and the antifouling layer 4.

2.2 Example 2 (Layer Structure: Type B)

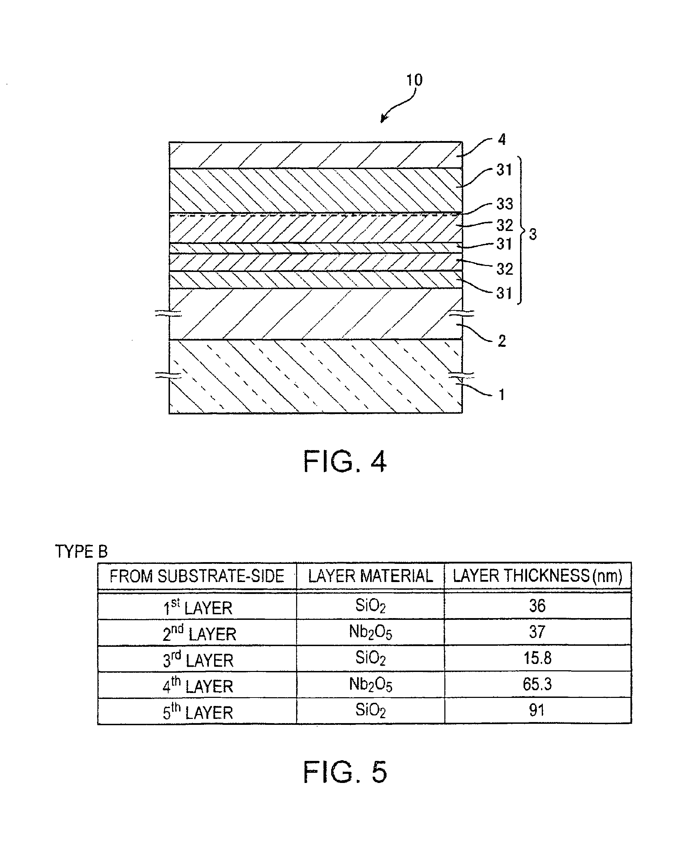

Fig. 4 shows the structure of a spectacle lens of Example 2 in cross section. The lens 10 of this example (Type B) has an antireflection layer 3 with a five-layer structure. The 1st layer, the 3rd layer, and the 5th layer are low-refractive-index layers 31, and the 2nd layer and the 4th layer are high-refractive-index layers 32.

The method for producing the lens 10 of this example differs from that of Example 1 in terms of the processes 2.1.2.2 (formation of low-refractive-index layer and high-refractive-index layer) and 2.1.2.3 (resistance reduction), but is otherwise the same as in Example 1.

The low-refractive-index layers 31 are $SiO_2$ layers, and were formed (film formation) by non-ion-assisted, vacuum deposition of silicon dioxide ($SiO_2$) as in the formation of low-refractive-index layers 31 in Example 1. The high-refractive-index layers 32 are $Nb_2O_5$ layers, and were formed (film formation) by ion-assisted deposition of niobium oxide ($Nb_2O_5$) while introducing oxygen gas as in the formation of high-refractive-index layers 32 in Example 1. The thicknesses of the 1st to 5th layers were controlled to be 36 nm, 37 nm, 15.8 nm, 65.3 nm, and 91 nm, respectively. Hereinafter, the $Nb_2O_5/SiO_2$-based, five-layer structure is referred to as Type B. Fig. 5 summarizes the material and thickness (nm) of each layer of Type B.

In Example 2, after forming the 1st to 4th layers, the surface layer 33 of the 4th layer was reformed (resistance reduction) as follows. The 5th layer was formed (film formation) after reducing the resistance of the surface layer of the 4th layer.

After forming the $Nb_2O_5$ layer 32 to serve as the 4th layer, titanium oxide ($TiO_x$ (X = 1.7)) was deposited by ion-assisted deposition (ion-beam-assisted deposition) under the conditions to obtain a deposition thickness of about 2 nm. Next, niobium oxide ($Nb_2O_5$) was deposited by ion-assisted deposition (ion-beam-assisted deposition) under the conditions to obtain a deposition thickness of about 1 nm. The conditions for each ion-beam-assisted deposition are as follows.

Deposition source: titanium oxide ($TiO_x$ (X = 1.7)), niobium oxide ($Nb_2O_5$)
Assist gas: argon (Ar)
Accelerating voltage: 1000 V, Accelerating current: 200 mA

2.3 Example 3 (Layer Structure: Type A)

The lens 10 of this example has an antireflection layer 3 with the seven-layer structure shown in Figs. 1 and 3. The 1st layer, the 3rd layer, the 5th layer, and the 7th layer are low-refractive-index layers 31, and the 2nd layer, the 4th layer, and the 6th layer are high-refractive-index layers 32. The method for producing the lens 10 of this example differs from that of Example 1 in terms of the process 2.1.2.3 (resistance reduction), but is otherwise the same as in Example 1.

In Example 3, after forming the 1st to 6th layers, the surface layer 33 of the 6th layer was reformed (resistance reduction). The 7th layer was formed (film formation) after reducing the resistance of the surface layer of the 6th layer.

After forming the $TiO_2$ layer 32 to serve as the 6th layer, niobium oxide ($Nb_2O_5$) was deposited by ion-assisted deposition (ion-beam-assisted deposition) under the conditions to obtain a deposition thickness of about 1 nm. The conditions for ion-beam-assisted deposition are as follows.

Deposition source: niobium oxide ($Nb_2O_5$)
Assist gas: argon (Ar)
Accelerating voltage: 1000 V, Accelerating current: 200 mA

2.4 Example 4 (Layer Structure: Type A)

The lens 10 of this example has an antireflection layer 3 with the layer structure of Type A ($TiO_2/SiO_2$-based, seven-layer structure) as in Example 3. The method for producing the lens 10 of this example differs from that of Example 3 in terms of the process 2.1.2.3 (resistance reduction).

In this example, the resistance reduction was performed as follows. After forming the $TiO_2$ layer 32 to serve as the 6th layer, niobium oxide ($Nb_2O_5$) was deposited by ion-assisted deposition (ion-beam-assisted deposition) under the conditions to obtain a deposition thickness of about 2 nm. Next, titanium oxide ($TiO_x$ (X = 1.7)) was deposited by ion-assisted deposition (ion-beam-assisted deposition) under the conditions to obtain a deposition thickness of about 1 mm. The conditions for each ion-beam-assisted deposition are as follows.

Deposition source: niobium oxide ($Nb_2O_5$), titanium oxide ($TiO_x$ (X = 1.7))
Assist gas: argon (Ar)
Accelerating voltage: 1000 V, Accelerating current: 200 mA

2.5 Example 5 (Layer Structure: Type C)

The lens 10 of this example has an antireflection layer 3 with the seven-layer structure shown in Fig. 1. The 1st layer, the 3rd layer, the 5th layer, and the 7th layer are low-refractive-index layers 31, and the 2nd layer, the 4th layer, and the 6th layer are high-refractive-index layers 32. The low-refractive-index layers 31 are $SiO_2$ layers, and the high-refractive-index layers 32 are $ZrO_2$ layers (refractive index: 2.1).

The method for producing the lens 10 of this example differs from that of Example 1 in terms of the processes 2.1.2.2 (formation of low-refractive-index layer and high-refractive-index layer) and 2.1.2.3 (resistance reduction), but is otherwise the same as in Example 1.

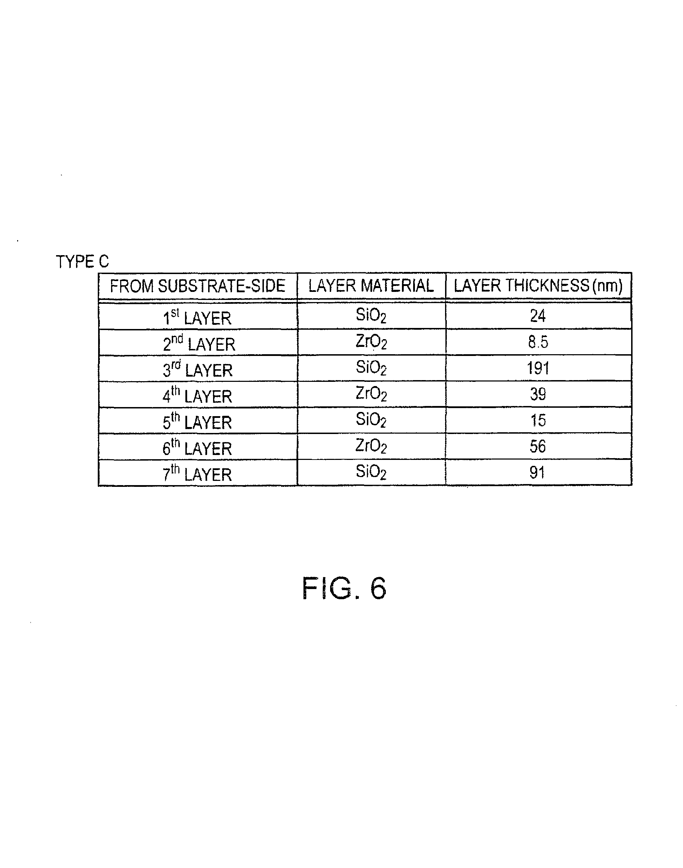

The low-refractive-index layers 31 are $SiO_2$ layers, and were formed (film formation) by non-ion-assisted, vacuum deposition of silicon dioxide ($SiO_2$) as in the formation of low-refractive-index layers 31 in Example 1. The high-refractive-index layers 32 are $ZrO_2$ layers, and were formed (film formation) by ion-assisted deposition of zirconium oxide ($ZrO_2$) using a ZrO sintered compact while introducing oxygen gas. The rate of film formation was 0.8 nm/sec, and the accelerating voltage and current of the electron gun were 7 kV and 280 mA, respectively. The thicknesses of the 1st to 7th layers were controlled to be 24 nm, 8.5 nm, 191 nm, 39 nm, 15 nm, 56 nm, and 91 nm. Hereinafter, the $ZrO_2$/$SiO_2$-based, seven-layer structure is referred to as Type C. Fig. 6 summarizes the material and thickness (nm) of each layer of Type C.

In Example 5, after forming the 1st to 6th layers, the surface layer 33 of the 6th layer was reformed (resistance reduction). The 7th layer was formed (film formation) after reducing the resistance of the surface layer of the 6th layer.

Resistance Reduction

After forming the $ZrO_2$ layer 32 to serve as the 6th layer, titanium oxide ($TiO_2$) was deposited by ion-assisted deposition (ion-beam-assisted deposition) under the conditions to obtain a deposition thickness of about 2 nm. Next, niobium oxide ($Nb_2O_5$) was deposited by ion-assisted deposition (ion-beam-assisted deposition) under the conditions to obtain a deposition thickness of about 1 nm. Further, titanium oxide ($TiO_2$) was deposited by ion-assisted deposition (ion-beam-assisted deposition) under the conditions to obtain a deposition thickness of about 2 nm. Further, niobium oxide ($Nb_2O_5$) was deposited by ion-assisted deposition (ion-beam-assisted deposition) under the conditions to obtain a deposition thickness of about 1 nm. The conditions for each ion-beam-assisted deposition are as follows.

Deposition source: titanium oxide ($TiO_2$), niobium oxide ($Nb_2O_5$), titanium oxide ($TiO_2$), niobium oxide ($Nb_2O_5$)
Assist gas: argon (Ar)
Accelerating voltage: 800 V, Accelerating current: 200 mA

2.6 Example 6 (Layer Structure: Type C)

A lens 10 having the same layer structure as in Example 5, Type C, was produced in the same manner as in Example 5, except for the process 2.1.2.3 (resistance reduction).

The process 2.1.2.3 (resistance reduction) was performed as follows. After forming the $ZrO_2$ layer 32 to serve as the 6th layer, niobium oxide ($Nb_2O_5$) was deposited by ion-assisted deposition (ion-beam-assisted deposition) under the conditions to obtain a deposition thickness of about 1 nm. Next, titanium oxide ($TiO_x$ (X = 1.7)) was deposited by ion-assisted deposition (ion-beam-assisted deposition) under the conditions to obtain a deposition thickness of about 2 nm. Further, niobium oxide ($Nb_2O_5$) was deposited by ion-assisted deposition (ion-beam-assisted deposition) under the conditions to obtain a deposition thickness of about 1 nm. The conditions for each ion-beam-assisted deposition are as follows.

Deposition source: niobium oxide ($Nb_2O_5$), titanium oxide ($TiO_x$ (X = 1.7)), niobium oxide ($Nb_2O_5$)
Assist gas: argon (Ar)

Accelerating voltage: 800 V, Accelerating current: 200 mA

2.7 Example 7 (Layer Structure: Type C)

A lens 10 having the same layer structure as in Example 5, Type C, was produced in the same manner as in Example 5, except for the process 2.1.2.3 (resistance reduction).

The process 2.1.2.3 (resistance reduction) was performed as follows. After forming the $ZrO_2$ layer 32 to serve as the 6th layer, titanium oxide ($TiO_2$) was deposited by ion-assisted deposition (ion-beam-assisted deposition) under the conditions to obtain a deposition thickness of about 2 nm. Next, niobium oxide ($Nb_2O_5$) was deposited by ion-assisted deposition (ion-beam-assisted deposition) under the conditions to obtain a deposition thickness of about 1 nm. Further, titanium oxide ($TiO_2$) was deposited by ion-assisted deposition (ion-beam-assisted deposition) under the conditions to obtain a deposition thickness of about 2 nm. The conditions for each ion-beam-assisted deposition are as follows.

Deposition source: titanium oxide ($TiO_2$), niobium oxide ($Nb_2O_5$), titanium oxide ($TiO_2$),
Assist gas: argon (Ar)
Accelerating voltage: 800 V, Accelerating current: 200 mA

2.8 Example 8 (Layer Structure: Type C)

A lens 10 having the same layer structure as in Example 5, Type C, was produced in the same manner as in Example 5, except for the process 2.1.2.3 (resistance reduction).

The process 2.1.2.3 (resistance reduction) was performed as follows. After forming the $ZrO_2$ layer 32 to serve as the 6th layer, metal niobium (Nb) was deposited by ion-assisted deposition (ion-beam-assisted deposition) under the conditions to obtain a deposition thickness of about 2 nm. Next, titanium oxide ($TiO_x$ (X = 1.7)) was deposited by ion-assisted deposition (ion-beam-assisted deposition) under the conditions to obtain a deposition thickness of about 3 nm. Further, metal niobium (Nb) was deposited by ion-assisted deposition (ion-beam-assisted deposition) under the conditions to obtain a deposition thickness of about 1 nm. The conditions for each ion-beam-assisted deposition are as follows.

Deposition source: metal niobium (Nb), titanium oxide ($TiO_x$ (X = 1.7)), metal niobium (Nb)
Assist gas: argon (Ar)
Accelerating voltage: 1000 V, Accelerating current: 200 mA

2.9 Example 9 (Layer Structure: Type C)

A lens 10 having the same layer structure as in Example 5, Type C, was produced in the same manner as in Example 5, except for the process 2.1.2.3 (resistance reduction).

The process 2.1.2.3 (resistance reduction) was performed as follows. After forming the $ZrO_2$ layer 32 to serve as the 6th layer, titanium oxide ($TiO_x$ (X = 1.7)) was deposited by ion-assisted deposition (ion-beam-assisted deposition) under the conditions to obtain a deposition thickness of about 2 nm. Next, metal niobium (Nb) was deposited by ion-assisted deposition (ion-beam-assisted deposition) under the conditions to obtain a deposition thickness of about 1 nm. Further, titanium oxide ($TiO_x$ (X = 1.7)) was deposited by ion-assisted deposition (ion-beam-assisted deposition) under the conditions to obtain a deposition thickness of about 2 nm. The conditions for each ion-beam-assisted deposition are as follows.

Deposition source: titanium oxide ($TiO_x$ (X = 1.7)), metal niobium (Nb), titanium oxide ($TiO_x$ (X = 1.7))
Assist gas: argon (Ar)
Accelerating voltage: 1000 V, Accelerating current: 200 mA

2.10 Comparative Example 1

As a lens of Comparative Example 1, a lens 10 having the same layer structure as in Example 5, Type C, was produced in the same manner as in Example 5, except that the process of resistance reduction was omitted in Comparative Example 1.

3. Evaluation of Lens Samples Produced in Examples 1 to 9 and Comparative Example 1

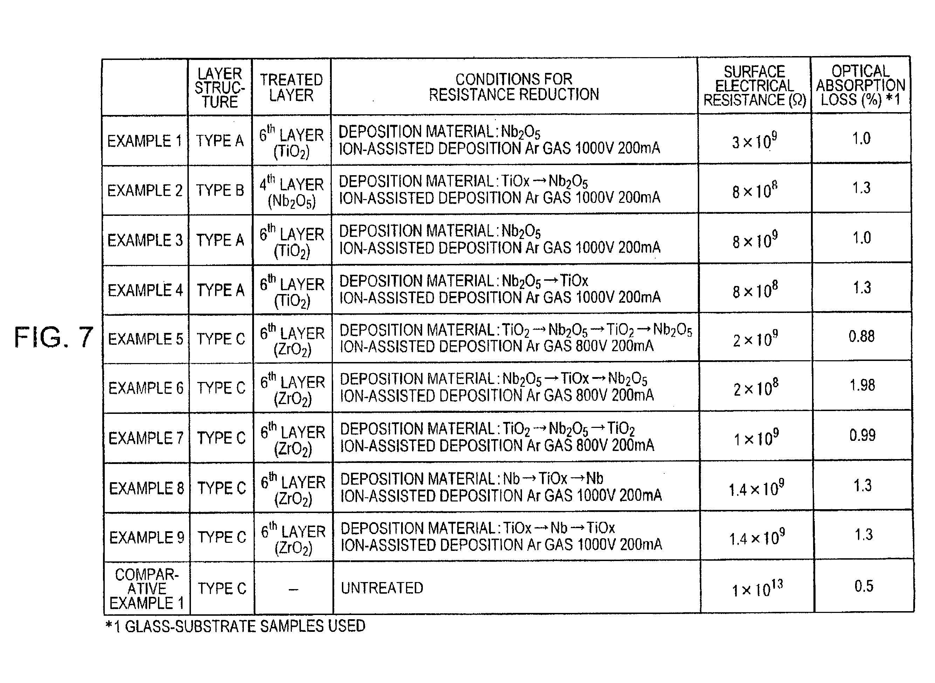

Electrical resistance and optical absorption loss were measured for the samples produced in the above Examples 1 to 9 and Comparative Example 1. The measurement results (evaluation results) are summarized in Fig. 7.

3.1 Electrical Resistance

3.1.1 Apparatus and Method for Measurement

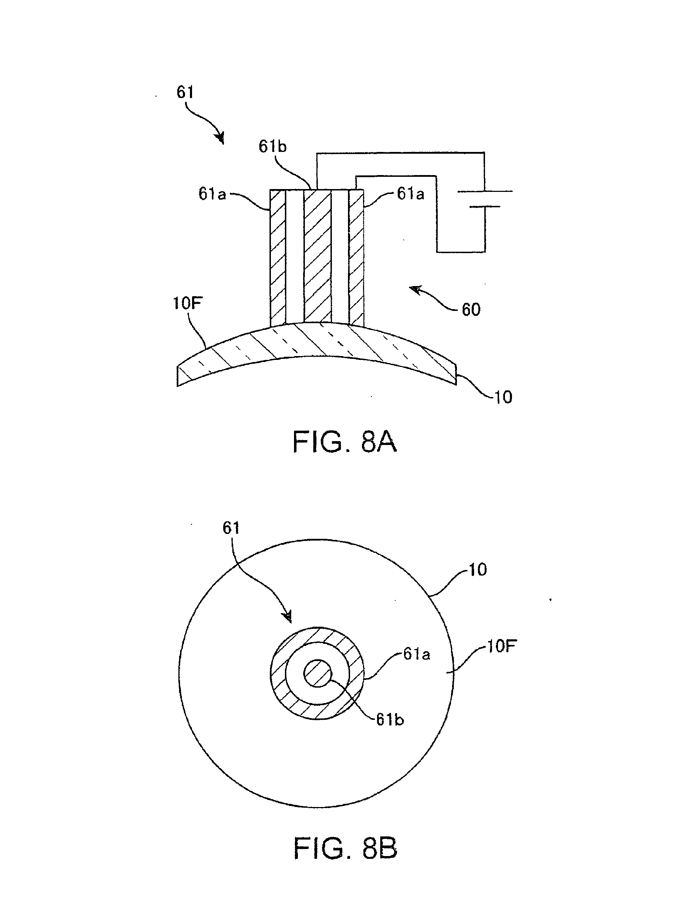

Figs. 8A and 8B show the measurement of the electrical resistance of the surface of each sample (surface electrical resistance). In this measurement, a ring probe 61 was brought into contact with the subject of measurement, that is, the surface 10F of each lens sample 10, to measure the resistance value of the surface 10F of each lens sample 10. As a measuring apparatus 60, a high-resistance resistivity meter Hiresta UP MCP-HT450 manufactured by MITSUBISHI CHEMICAL was used. The ring probe 61 used is a URS probe and has two electrodes. The exterior ring electrode 61a has an outer diameter of 18 mm and an inner diameter of 10 mm. The interior, circular electrode 61b has a diameter of 7 mm. A voltage of 1000 V to 10 V was applied between the electrodes, and the surface electrical resistance value of each sample was measured.

3.1.2 Evaluation Results

According to the measurement results shown in Fig. 7, the surface resistance value of the lens sample produced by the method of Comparative Example 1 is $1 \times 10^{13}$ $\Omega$. With respect to the lens samples produced by the methods of Examples 1 to 9 to achieve a reduction in electrical resistance, the surface resistance values thereof were reduced to $2 \times 10^8$ $\Omega$ to $8 \times 10^9$ $\Omega$. That is, the results show that the reduced resistance values of the lens samples obtained by the methods of Examples 1 to 9 are smaller by four or five orders of magnitude ($10^4$ to $10^5$) than that of the conventional sample. In other words, the electrical resistance values are $1/10^4$ to $1/10^5$ that of the conventional sample. It is thus shown that as a result of ion-assisted deposition of at least one composition selected from the group consisting of titanium, niobium, oxides of titanium, and oxides of niobium on the surface layer of one of the layers forming an antireflection layer, a reduction in surface resistance can be achieved.

In Examples 1 to 9, at least one composition selected from the group consisting of titanium, niobium, oxides of titanium, and oxides of niobium is deposited by ion-assisted deposition, so that titanium (Ti) atoms, niobium (Nb) atoms, and oxygen (O) atoms are mixed in the surface layer 33. For example, in Examples 1 and 2, it is assumed that as a result of ion-assisted deposition of niobium oxide or metal niobium and titanium oxide on the surface layer 33 of the titanium oxide layer serving as the 6th or 4th layer (the first layer), the surface layer (surface portion) 33 of the titanium oxide layer is doped with niobium, and a Ti-Nb-O layer or region is thus formed in at least a portion of the surface layer 33. Further, from the above evaluation results showing that the surface has reduced electrical resistance, it is assumed that in the Ti-Nb-O layer or region formed as a result of ion-assisted deposition, at least part of titanium is crystallized in the anatase form or is in a similar state, and is TN-Oxidized. Therefore, it is believed that as a result of ion-assisted deposition, the Ti-Nb-O layer or region was formed in the surface layer 33 of the titanium oxide layer serving as the 6th or 4th layer or in a portion of the surface layer 33 without keeping the substrate temperature as high as 300 °C more, and this allowed the formation of TNO or a like crystalline structure at least within a short cycle. Accordingly, even in the case of using a substrate unsuitable for a high-temperature process, such as a plastic lens substrate as used in this example, TNO can be introduced into the boundary region of the layer surface, and resistance reduction by TNO can be achieved.

The Ti-Nb-O layer or region is formed by a method including ion-assisted deposition of metal titanium, titanium oxide, metal niobium, or niobium oxide on the surface layer 33, and is different from a laminated titanium-niobium-based high-refractive-index layer formed by deposition of a titanium-niobium mixture. That is, in the case of depositing a titanium-niobium mixture, the resistance will not be reduced unless the mixture is deposited on a high-temperature substrate and epitaxially grown. Accordingly, there has been no report on resistance reduction in the usual, titanium-niobium-based high-refractive-index layer. In Examples 1 and 2 above, a titanium-niobium mixture is not deposited; instead, an oxide of one of titanium and niobium is applied by ion-assisted deposition to the oxide of the other, and, as a result, assumedly, titanium in the surface layer 33 is completely or partially transformed to anatase, forming electrically conductive TNO.

Likewise, in Examples 3 and 4, it is assumed that as a result of ion-assisted deposition of titanium oxide or metal titanium and niobium oxide on the surface layer 33 of the niobium oxide layer serving as the 6th layer (the first layer), the surface layer (surface portion) 33 of the niobium oxide layer is doped with titanium, and a Ti-Nb-O layer or region is thus formed in at least a portion of the surface layer 33. As shown in Examples 5 to 9, it is assumed that as a result of ion-assisted deposition of titanium oxide or metal titanium and niobium oxide or metal niobium on the surface layer 33 of the zirconium oxide layer serving as the 6th layer (the first layer), a Ti-Nb-O layer or region is formed in at least a portion of the surface layer (surface portion) 33 of the zirconium oxide layer. The samples of these examples also have reduced electrical resistance, and it is thus assumed that at least a portion of the surface layer 33 has been TN-Oxidized without using a high-temperature process.

The reduction in the surface resistance of an optical article such as a lens or a cover glass offers some advantages. A typical advantage is the provision of antistatic performance and electromagnetic shielding performance. In a spectacle lens, an electrical resistance value of not more than $1 \times 10^{11}\ \Omega$ is thought to be an index of the presence of antistatic properties. Considering the safety in use, etc., it is more preferable that the electrical resistance value is not more than $1 \times 10^{10}\ \Omega$. The lens samples produced in Examples 1 to 9 each have an electrical resistance value of not more than $1 \times 10^{10}\ \Omega$, indicating their excellent antistatic properties. According to the measurement results, in these examples, the electrical resistance has been sufficiently reduced simply by treating the surface layer of one layer of the multilayer antireflection film. Thus, resistance reduction can be achieved with little increase in the number of steps. Needless to say, it is also possible to treat the surface layers of two or more layers of the multilayer antireflection film.

Further, the process of ion-assisted deposition of titanium, titanium oxide, niobium, and niobium oxide on a surface layer has much in common with the process of deposition of titanium oxide and niobium oxide for forming high-refractive-index layers of an antireflection film. Therefore, the process for forming an antireflection film can be applied with little change. Also in this respect, the process of ion-assisted deposition of titanium, titanium oxide, niobium, and niobium oxide on a surface layer is easily applicable to the reduction of the electrical resistance of the surface of an optical article such as a glass lens.

3.2 Absorption Loss

3.2.1 Apparatus and Method for Measurement

Next, optical absorption loss was measured for each lens sample. Optical absorption loss is difficult to measure when the surface is curved, for example. For this reason, using a substrate 1 made of glass (glass substrate), a sample (glass sample) for the measurement of light-absorption loss was formed for each of Examples in the same manner as in the lens sample formation. The formed glass samples were used in the measurement of absorption loss.

Light-absorption loss was measured as follows. Reflectivity and transmissivity were measured using a spectrophotometer, and absorptivity was calculated by the formula (A). In the measurement, a spectrophotometer U-4100 manufactured by HITACHI was employed.

$$\text{Absorptivity (absorption loss)} = 100\% - \text{transmissivity} - \text{reflectivity} \ \ldots \ (A)$$

Fig. 7 shows the results of the measurement of average light absorptivity for each glass sample at a wavelength of 400 to 700 nm.

3.2.2 Evaluation Results

As compared with the glass sample of Comparative Example 1, the glass samples of Examples 1 to 9 have a slightly higher tendency for absorption loss to increase. However, even the highest loss does not exceed 2%. The light transmittance is sufficiently high, and the increase in optical absorption loss is so insignificant that it does not greatly affect the light transmittance of the antireflection layer 3. It can thus be said that the lens samples produced by the methods of Examples 1 to 9 each have sufficient light transmittance as a spectacle lens.

It is assumed that as a result of ion-assisted deposition of at least one composition selected from the group consisting of titanium, niobium, oxides of titanium, and oxides of niobium on the surface layer 33 of one of the layers forming the antireflection layer, the optical state of the surface layer 33 is disturbed, thereby increasing the light-absorption loss. However, in these examples, it is assumed that the surface layer 33 has TNO formed at least in a portion thereof. TNO itself is a transparent, electrically conductive layer. Therefore, the optical absorption loss does not greatly increase, and the electrical resistance of the surface can be reduced with little effect on the optical properties of the optical article.

3.3 Overall Evaluation

The above evaluation results show that the lens samples produced by the methods of Examples 1 to 9 are optical articles in which the surface electrical resistance has been sufficiently reduced to provide, for example, antistatic performance and electromagnetic shielding performance with little reduction in the optical properties thereof. In these samples, reduced resistance has been achieved using titanium and niobium, which are available at low cost, are less likely to suffer from resource exhaustion problems or the like, and have low toxicity. These samples can thus be considered industrially advantageous over lens samples using ITO that includes indium, which is expensive and is not abundant.

Further, in accordance with the embodiments of the invention, resistance reduction requires almost no increase in the temperature of the substrate. Therefore, a high-temperature process at 300°C or more as used in the production of titanium/niobium-based transparent electrodes is unnecessary. Accordingly, such a method according to the embodiments of the invention is suitable for application to the production of an optical article having a substrate with relatively low resistance to high temperatures, such as a plastic lens.

By reducing the resistance of the surface layer of the first layer as mentioned above, not only in such a layer but also, when present, in some layers laminated thereon, the surface electrical resistance value or resistivity can be reduced. Therefore, the layer to be subjected to resistance reduction is not limited to the 4th layer of a five-layer structure or the 6th layer of a seven-layer structure, and may also be any other layer. It is also possible to reduce the resistance of the surface layers of a plurality of layers.

The antireflection layer structures descried in the above examples are mere examples, and do not limit the invention. For example, the antireflection layer may also consist of three or fewer layers or nine or more layers. Also in such a case, the number of layers to be subjected to resistance reduction is not limited to one. Further, the combinations of high-refractive-index and low-refractive-index layers are not limited to $TiO_2/SiO_2$, $Nb_2O_5/SiO_2$, and $ZrO_2/SiO_2$, and may also be $Ta_2O_5/SiO_2$, $NdO_2/SiO_2$, $HfO_2/SiO_2$, $Al_2O_3/SiO_2$, etc. It is believed that also in the case of using such a composition, by reducing the resistance of the surface layer of any layer as above, the resistance value of the antireflection layer 3 can be reduced, improving the electrical conductivity thereof.

A method for producing an optical article according to the embodiments of the invention is applicable not only to the production of spectacle lenses, but also to the production of projection lenses, imaging lenses, dichroic prisms, cover glasses, DVDs and like information recording devices, ornaments having an internal medium that gives aesthetic expression, etc. In such applications, the method can provide an optical article with an antistatic function. The embodiments mentioned above are mere examples, and other methods for producing an optical article to which a person skilled in the art can apply the invention are encompassed by the scope of the invention.

**Claims**

1. A method for producing an optical article, the method comprising:

    forming a first layer that is light-transmissive on a plastic lens substrate (1), either directly or with another layer in between; and

    mixing titanium, niobium and oxygen in at least a portion of the surface layer of the first layer by ion-beam-assisted deposition of a composition onto at least a portion of the surface layer of the first layer, which reduces electrical resistance in the at least a portion of the surface layer of the first layer in which titanium, niobium and oxygen are mixed;

    wherein the first layer contains an oxide of titanium, and the depositing step comprises ion-beam-assisted deposition of niobium or an oxide thereof; or

    wherein the first layer is an oxide layer containing no titanium or niobium, and the depositing step comprises ion-beam-assisted deposition of niobium followed by ion-beam-assisted deposition of titanium or an oxide of titanium.

2. A method according to claim 1, wherein the depositing step includes titanium-niobium-oxidizing at least a portion of the surface layer of the first layer.

3. A method according to claim 1, wherein the first layer is a layer included in an antireflection layer (3) with a multilayer structure.

4. A method according to claim 3, further comprising forming an antifouling layer (4) on the first layer, either directly or with another layer in between.

5. A method according to claim 1, wherein the optical article is a spectacle lens.

**Patentansprüche**

1. Verfahren zur Herstellung eines optischen Artikels, wobei das Verfahren folgendes umfasst:

    Bilden einer ersten Schicht, die lichtdurchlässig ist, auf einem Kunststofflinsensubstrat (1), entweder direkt oder mit einer anderen Schicht dazwischen; und

    Einmischen von Titan, Niob und Sauerstoff in mindestens einen Teil der Oberflächenschicht der ersten Schicht durch eine Ionenstrahl-unterstützte Abscheidung einer Zusammensetzung auf mindestens einen Teil der Oberflächenschicht der ersten Schicht, was den elektrischen Widerstand in dem mindestens einen Teil der Oberflächenschicht der ersten Schicht, in der Titan, Niob und Sauerstoff eingemischt sind, reduziert;

wobei die erste Schicht ein Titanoxid umfasst, und der Abscheidungsschritt die Ionenstrahl-unterstützte Abscheidung von Niob oder einem Oxid davon umfasst; oder

wobei die erste Schicht eine Oxidschicht ist, die kein Titan oder Niob umfasst, und der Abscheidungsschritt eine Ionenstrahl-unterstützte Abscheidung von Niob umfasst, gefolgt von einer Ionenstrahl-unterstützten Abscheidung von Titan oder einem Titanoxid.

2. Verfahren nach Anspruch 1, bei dem der Abscheidungsschritt die Titan-Niob-Oxidation zumindest eines Teils der Oberflächenschicht der ersten Schicht umfasst.

3. Verfahren nach Anspruch 1, bei dem die erste Schicht eine Schicht ist, die in einer Antireflektionsschicht (3) mit einer Multischichtstruktur enthalten ist.

4. Verfahren nach Anspruch 3, das ferner die Bildung einer Antifouling-Schicht (4) auf der ersten Schicht umfasst, entweder direkt oder mit einer anderen Schicht dazwischen.

5. Verfahren nach Anspruch 1, bei dem der optische Artikel eine Brillenlinse ist.


**Revendications**

1. Procédé de production d'un article optique, le procédé comprenant le fait :

de former une première couche qui transmet de la lumière sur un substrat de lentille en plastique (1), soit directement ou avec une autre couche entre ceux-ci ; et

de mélanger du titane, du niobium et de l'oxygène dans au moins une partie de la couche de surface de la première couche par un dépôt assisté par faisceau ionique d'une composition sur au moins une partie de la couche de surface de la première couche, qui réduit la résistance électrique dans l'au moins une partie de la couche de surface de la première couche dans laquelle du titane, du niobium et de l'oxygène sont mélangés ;

dans lequel la première couche contient un oxyde de titane, et l'étape de dépôt comprend le dépôt assisté par faisceau ionique de niobium ou d'un oxyde de celui-ci ; ou

dans lequel la première couche est une couche d'oxyde ne contenant pas du titane ou du niobium, et l'étape de dépôt comprend le dépôt assisté par faisceau ionique de niobium suivi du dépôt assisté par faisceau ionique de titane ou d'un oxyde de titane.

2. Procédé selon la revendication 1, dans lequel l'étape de dépôt comporte l'oxydation au titane-niobium d'au moins une partie de la couche de surface de la première couche.

3. Procédé selon la revendication 1, dans lequel la première couche est une couche incluse dans une couche antireflet (3) ayant une structure multicouche.

4. Procédé selon la revendication 3, comprenant en outre la formation d'une couche antisalissure (4) sur la première couche, soit directement ou avec une autre couche entre celles-ci.

5. Procédé selon la revendication 1, dans lequel l'article optique est un verre de lunettes.

FIG. 1

FIG. 2

TYPE A

| FROM SUBSTRATE-SIDE | LAYER MATERIAL | LAYER THICKNESS (nm) |
|---|---|---|
| 1st LAYER | $SiO_2$ | 28 |
| 2nd LAYER | $TiO_2$ | 6.6 |
| 3rd LAYER | $SiO_2$ | 204 |
| 4th LAYER | $TiO_2$ | 23 |
| 5th LAYER | $SiO_2$ | 36 |
| 6th LAYER | $TiO_2$ | 28 |
| 7th LAYER | $SiO_2$ | 100 |

FIG. 3

FIG. 4

TYPE B

| FROM SUBSTRATE-SIDE | LAYER MATERIAL | LAYER THICKNESS (nm) |
|---|---|---|
| 1st LAYER | SiO$_2$ | 36 |
| 2nd LAYER | Nb$_2$O$_5$ | 37 |
| 3rd LAYER | SiO$_2$ | 15.8 |
| 4th LAYER | Nb$_2$O$_5$ | 65.3 |
| 5th LAYER | SiO$_2$ | 91 |

FIG. 5

TYPE C

| FROM SUBSTRATE-SIDE | LAYER MATERIAL | LAYER THICKNESS (nm) |
|---|---|---|
| 1st LAYER | $SiO_2$ | 24 |
| 2nd LAYER | $ZrO_2$ | 8.5 |
| 3rd LAYER | $SiO_2$ | 191 |
| 4th LAYER | $ZrO_2$ | 39 |
| 5th LAYER | $SiO_2$ | 15 |
| 6th LAYER | $ZrO_2$ | 56 |
| 7th LAYER | $SiO_2$ | 91 |

# FIG. 6

**FIG. 7**

| | LAYER STRUC-TURE | TREATED LAYER | CONDITIONS FOR RESISTANCE REDUCTION | SURFACE ELECTRICAL RESISTANCE ($\Omega$) | OPTICAL ABSORPTION LOSS (%) *1 |
|---|---|---|---|---|---|
| EXAMPLE 1 | TYPE A | $6^{th}$ LAYER ($TiO_2$) | DEPOSITION MATERIAL: $Nb_2O_5$<br>ION-ASSISTED DEPOSITION Ar GAS 1000V 200mA | $3 \times 10^9$ | 1.0 |
| EXAMPLE 2 | TYPE B | $4^{th}$ LAYER ($Nb_2O_5$) | DEPOSITION MATERIAL: $TiOx \rightarrow Nb_2O_5$<br>ION-ASSISTED DEPOSITION Ar GAS 1000V 200mA | $8 \times 10^8$ | 1.3 |
| EXAMPLE 3 | TYPE A | $6^{th}$ LAYER ($TiO_2$) | DEPOSITION MATERIAL: $Nb_2O_5$<br>ION-ASSISTED DEPOSITION Ar GAS 1000V 200mA | $8 \times 10^9$ | 1.0 |
| EXAMPLE 4 | TYPE A | $6^{th}$ LAYER ($TiO_2$) | DEPOSITION MATERIAL: $Nb_2O_5 \rightarrow TiOx$<br>ION-ASSISTED DEPOSITION Ar GAS 1000V 200mA | $8 \times 10^8$ | 1.3 |
| EXAMPLE 5 | TYPE C | $6^{th}$ LAYER ($ZrO_2$) | DEPOSITION MATERIAL: $TiO_2 \rightarrow Nb_2O_5 \rightarrow TiO_2 \rightarrow Nb_2O_5$<br>ION-ASSISTED DEPOSITION Ar GAS 800V 200mA | $2 \times 10^9$ | 0.88 |
| EXAMPLE 6 | TYPE C | $6^{th}$ LAYER ($ZrO_2$) | DEPOSITION MATERIAL: $Nb_2O_5 \rightarrow TiOx \rightarrow Nb_2O_5$<br>ION-ASSISTED DEPOSITION Ar GAS 800V 200mA | $2 \times 10^8$ | 1.98 |
| EXAMPLE 7 | TYPE C | $6^{th}$ LAYER ($ZrO_2$) | DEPOSITION MATERIAL: $TiO_2 \rightarrow Nb_2O_5 \rightarrow TiO_2$<br>ION-ASSISTED DEPOSITION Ar GAS 800V 200mA | $1 \times 10^9$ | 0.99 |
| EXAMPLE 8 | TYPE C | $6^{th}$ LAYER ($ZrO_2$) | DEPOSITION MATERIAL: $Nb \rightarrow TiOx \rightarrow Nb$<br>ION-ASSISTED DEPOSITION Ar GAS 1000V 200mA | $1.4 \times 10^9$ | 1.3 |
| EXAMPLE 9 | TYPE C | $6^{th}$ LAYER ($ZrO_2$) | DEPOSITION MATERIAL: $TiOx \rightarrow Nb \rightarrow TiOx$<br>ION-ASSISTED DEPOSITION Ar GAS 1000V 200mA | $1.4 \times 10^9$ | 1.3 |
| COMPAR-ATIVE EXAMPLE 1 | TYPE C | — | UNTREATED | $1 \times 10^{13}$ | 0.5 |

*1 GLASS-SUBSTRATE SAMPLES USED

FIG. 8A

FIG. 8B

## REFERENCES CITED IN THE DESCRIPTION

**Patent documents cited in the description**

- JP 2004341052 A
- WO 2006016608 A
- JP 2004300580 A
- US 20090141357 A
- JP 2001233611 A
- JP 2005301208 A
- JP 2006126782 A

**Non-patent literature cited in the description**

- *Applied Physics Express,* 2008, vol. 1, 115001